# EUROPÄISCHE PATENTSCHRIFT

(11) **EP 2 965 614 B1**
(45) Veröffentlichungstag und Bekanntmachung des Hinweises auf die Patenterteilung: **31.01.2018**
(21) Anmeldenummer: 15165242.7
(22) Anmeldetag: 27.04.2015
(51) Int. Cl.: A01F 7/06

(54) **EINLAUFKOPFGEHÄUSE**
ENTRY SECTION HEAD HOUSING
BOÎTIER DE COLLECTEUR D'ENTRÉE

(30) Priorität: 10.07.2014 DE 102014109702
(43) Veröffentlichungstag der Anmeldung: 13.01.2016
(73) Patentinhaber: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE)

(56) Entgegenhaltungen:
- EP-A1- 0 230 276
- EP-A1- 1 147 701
- EP-A1- 2 574 231
- WO-A1-2010/086063

## Beschreibung

Die vorliegende Erfindung betrifft ein Einlaufkopfgehäuse für ein Paar Axialabscheiderotoren gemäß dem Oberbegriff des Anspruches 1 sowie einen selbstfahrenden Mähdrescher gemäß Anspruch 10.

Aus der WO 2010/086063 A1 sind ein Einlaufkopfgehäuse sowie ein selbstfahrender Mähdrescher der eingangs genannten Art bekannt. Der Mähdrescher umfasst eine ein Paar Abscheiderotoren aufweisende Axialabscheidevorrichtung, welche mit ihrem einen Ende in dem Einlaufkopfgehäuse angeordnet sind. In einem Bereich vor den Öffnungen der Abscheiderotoren befindet sich jeweils ein flächiger Einlaufabschnitt, durch welchen Erntegut dem jeweiligen Abscheiderotor zugeführt wird. Die Zuführung des Erntegutes erfolgt durch eine tangential fördernde Zuführtrommel, die oberhalb des Einlaufabschnittes von den Öffnungen der Abscheiderotoren angeordnet ist. Auf Grund der räumlichen Beabstandung der Abscheiderotoren zueinander weist das Einlaufkopfgehäuse einen rampenförmigen Gehäuseabschnitt auf, dessen Breite im Wesentlichen dem Abstand der beiden Abscheiderotoren zueinander entspricht. Dieser in vertikaler Richtung ansteigende rampenförmige Gehäuseabschnitt weist ein konkaves Profil auf und dient der Unterstützung bei der Auftrennung des zugeführten Erntegutes, um eine gleichmäßige Beschickung der Abscheiderotoren mit Erntegut zu erreichen. Oberhalb des rampenförmigen Gehäuseabschnittes, auf der den Einlaufabschnitten gegenüberliegenden Seite des Einlaufkopfgehäuses ist ein Umlenkelement angeordnet. Das Umlenkelement dient dazu, Erntegut, welches von dem rampenförmigen Gehäuseabschnitt nicht aufgetrennt wird, sondern vielmehr entlang seiner Oberfläche nach oben geschoben wird, in Umfangsrichtung der Zuführtrommel abzulenken. Das von dem Umlenkelement abgelenkte Erntegut gelangt vor oder oben auf die Zuführtrommel, welche dieses mit neu von dem Mähdrescher aufgenommenen Erntegut zusammenführt. Daraufhin wird das Erntegut erneut den Abscheiderotoren zugeführt.

Nachteilig an diesem Umlenkelement ist, dass das Erntegut, welches in Folge von Feuchtigkeit oder Strohlänge durch den rampenförmigen Gehäuseabschnitt zwischen den Abscheiderotoren nicht aufgeteilt werden konnte, erneut der Zuführwalze zugeführt wird, um in zumindest einem weiteren Zuführversuch aufgetrennt zu werden. Diese Vorgehensweise führt zu einer nicht unerheblichen Belastung der Zuführtrommel.

Es ist daher die Aufgabe der vorliegenden Erfindung, ein Einlaufkopfgehäuse für eine Axialabscheidevorrichtung sowie einen Mähdrescher bereitzustellen, welche sich durch eine verbesserte Auftrennung des Erntegutstromes vor dessen Eintritt in die Axialabscheidevorrichtung auszeichnen.

Diese Aufgabe wird erfindungsgemäß durch einen Einlaufkopfgehäuse gemäß dem Anspruch 1 sowie durch einen Mähdrescher gemäß dem Anspruch 9 gelöst.

Gemäß dem Anspruch 1 wird vorgeschlagen, dass auf dem rampenförmigen Gehäuseabschnitt ein sich achsparallel zu diesem erstreckendes, im Wesentlichen klingenförmiges Trennelement angeordnet ist. Das Trennelement wirkt wie eine Schneide auf das Erntegut ein, so dass die Wirkung des rampenförmigen Gehäuseabschnittes beim Auftrennen des Erntegutes, welches gegen das Trennelement gepresst wird, deutlich verbessert wird. Das Trennelement weist eine mit dem Gehäuseabschnitt korrespondierende Kontur auf.

Das Trennelement kann unmittelbar auf dem rampenförmigen Gehäuseabschnitt angeordnet sein. Dabei kann vorgesehen sein, dass das Trennelement lösbar an dem Gehäuseabschnitt befestigt ist. Hierdurch lässt sich ein einfaches Austauschen beziehungsweise Nachrüsten des rampenförmigen Gehäuseabschnittes mit dem Trennelement bewerkstelligen.

Vorzugsweise kann auf dem rampenförmigen Gehäuseabschnitt ein keilförmiger Vorsprung angeordnet sein, der der Aufnahme des Trennelementes dient. Das Trennelement kann lösbar an dem Vorsprung befestigt sein. Dabei kann der keilförmige Vorsprung in Längsrichtung eine zunehmende Breite aufweisen. Der zusätzliche Vorsprung auf dem Gehäuseabschnitt unterstützt auf Grund seiner sich in Längsrichtung ändernden Breite das seitliche Ablenken des Aufgetrennten Erntegutes zu den Öffnungen der Abscheiderotoren hin.

Weiterhin kann sich das Trennelement abschnittsweise über die Breite des Vorsprunges erstrecken. Das Trennelement kann einen Sockel zur Befestigung an dem Vorsprung aufweisen und sich in axialer Richtung gleichförmig oder sprunghaft verjüngend ausgeführt sein, so dass es in einer Art Schneide mündet.

Insbesondere kann sich das Trennelement zumindest abschnittsweise in Längsrichtung des Gehäuseabschnittes erstrecken.

Vorzugsweise kann das Trennelement eine profilierte Trennkante aufweisen. Diese Trennkante kann in Abhängigkeit von Erntegutart und Erntebedingungen variieren. Insbesondere auf Grund der Nachrüstbarkeit beziehungsweise damit einhergehend der Auswechselbarkeit kann das Trennelement entsprechend ausgetauscht werden, wenn es die Erntebedingungen erfordern.

Hierbei kann die Trennkante ein aus einer Vielzahl von zumindest teilweise bogenförmig ausgeführten Abschnitten gebildetes Profil aufweisen. Ein Vorteil dieses Profils besteht darin, dass ein Verklemmen von Stroh zwischen den Abschnitten vermieden werden kann.

Alternativ kann die Trennkante ein sägezahnförmiges Profil aufweisen. Dieses Profil wirkt aggressiver auf das aufzutrennende Erntegut ein.

Bevorzugt kann die Trennkante ein aus einer Vielzahl von Polygonen gebildetes Profil aufweisen.

Vorteilhafterweise kann die Höhe der Profilierung in Längsrichtung des Trennelementes abnehmen. Diese Ausführung trägt dem Umstand Rechnung, dass im unteren Bereich des rampenförmigen Gehäuseabschnittes beziehungsweise des Vorsprunges das Aufkommen an aufzutrennendem Erntegut größer ist, als im oberen Bereich, in welchem die aufzutrennende Erntegutmenge abnimmt.

Weiterhin betrifft die Erfindung einen selbstfahrenden Mähdrescher, der durch einen Einlaufkopf nach einem der Ansprüche 1 bis 9 gekennzeichnet ist.

Vorzugsweise kann dem Einlaufkopfgehäuse eine tangential angeordnete Zuführtrommel zugeordnet sein, die in ihrem Mittenbereich in Umfangsrichtung angeordnete V-förmige Leitbleche aufweist, die sich, ausgehend von der Mantelfläche der Zuführtrommel radial nach außen erstrecken. Die Leitbleche können sich in Rotationsrichtung der Zuführtrommel verjüngend ausgebildet sein.

Vorteilhafterweise kann das jeweilige Leitblech auf seiner Außenkante eine Profilierung aufweisen. Diese Profilierung kann entsprechend der Profilierung des Trennelementes ausgeführt sein. Diese Anordnung ist vorteilhaft, da die Profilierung auf den Außenkanten der Leitbleche der rotierenden Zuführtrommel mit dem als eine Art Gegenmesser fungierenden Trennelement zusammenwirken kann.

Hierbei kann die Profilierung in die Außenkante des Leitbleches eingearbeitet sein.

Alternativ kann die Profilierung an einer Außenkante eines Profilbleches vorgesehen sein, welches an dem Leitblech lösbar befestigt ist. Das Profilblech kann als Verschleißbauteil ausgeführt sein, welches bei Bedarf auf Grund der lösbaren Anbringung an dem Leitblech auswechselbar ist. Das Profilblech kann im Wesentlichen mit der Form und den Abmessungen des Leitbleches korrespondieren.

Die vorliegende Erfindung wird nachstehend anhand eines in den Zeichnungen dargestellten Ausführungsbeispieles näher erläutert.

Es zeigen:
- Fig. 1: eine schematische Ansicht eines selbstfahrenden Mähdrescher;
- Fig. 2a: eine Ansicht eines Einlaufkopfgehäuses des Mähdreschers gemäß Fig. 1 von schräg vorne;
- Fig. 2b: eine Seitenansicht des Einlaufkopfgehäuses gemäß Fig. 2a;
- Fig. 3: eine Detailansicht eines Trennelementes.

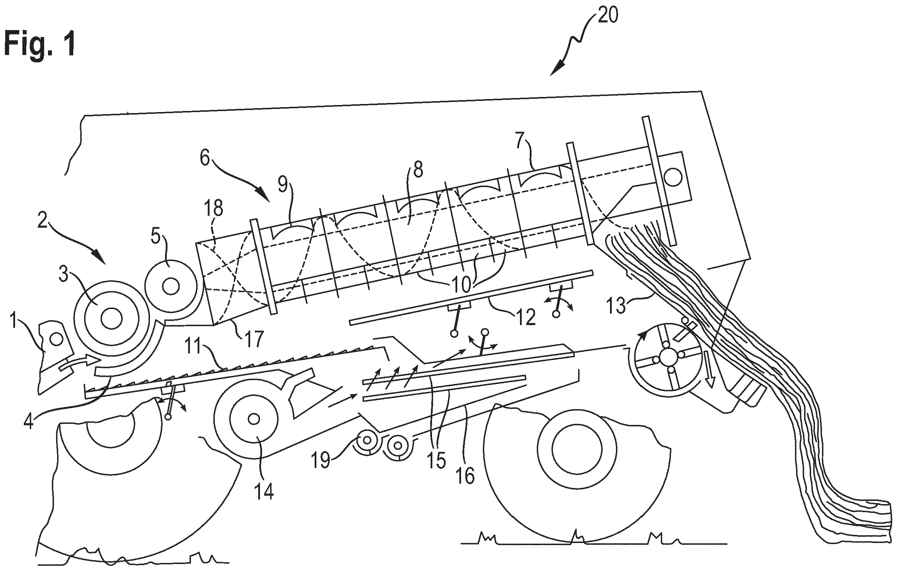

Die Darstellung in Fig. 1 zeigt einen schematischen Längsschnitt durch den hinteren Bereich eines Mähdreschers 20. In dem nicht dargestellten vorderen Bereich des Mähdreschers 20 wird zu verarbeitendes Erntegut aufgenommen und von einer nur ansatzweise dargestellten Fördereinrichtung 1 einer tangential wirkenden Drescheinrichtung 2 zugeführt. Die Drescheinrichtung 2 umfasst eine Dreschtrommel 3 mit quer zur Fahrrichtung des Mähdreschers 20 orientierter Achse, die auf einem Teil ihres Umfangs von einem Dreschkorb 4 umgeben ist. Ein Teilstrom des von der Drescheinrichtung 2 bearbeiteten Erntegutes gelangt durch Öffnungen in dem Dreschkorb 4 auf einen darunter befindlichen Förderboden 11.

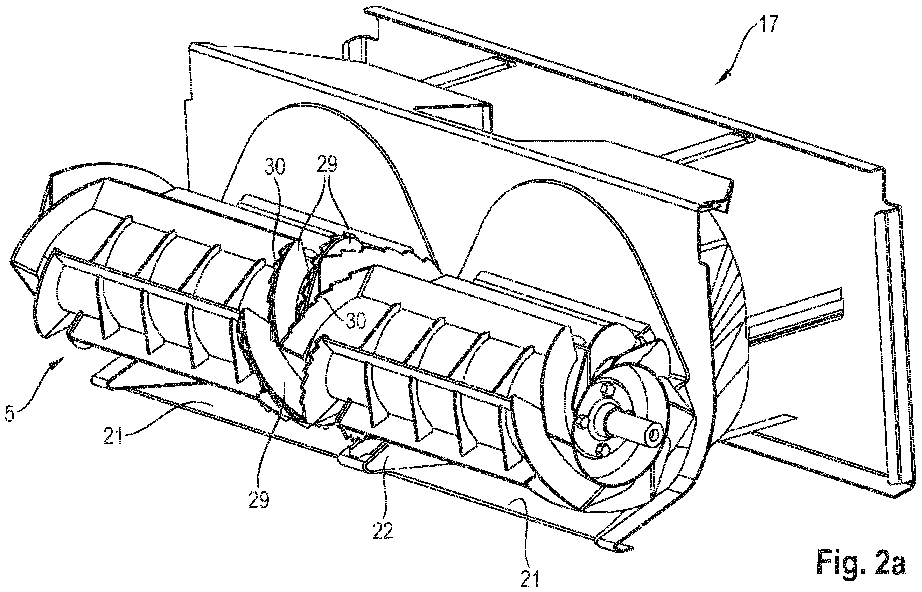

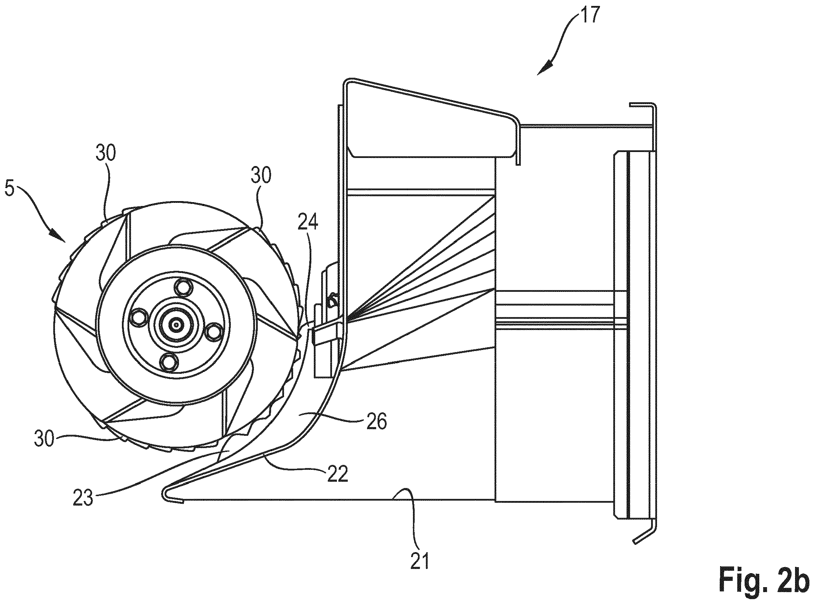

Ein größerer Teilstrom des Erntegutes wird jedoch zwischen Dreschtrommel 3 und Dreschkorb 4 hindurchgeführt und mit Unterstützung durch eine Leittrommel oder Zuführtrommel 5 einer Axialabscheidevorrichtung 6 zugeführt. Die schematisiert dargestellte Axialabscheidevorrichtung 6 ist als zumindest ein zylindrisches, an seinen Enden offenes Gehäuse 7 ausgeführt, in dem über seine gesamte Länge zwei als Förderorgan ausgebildete Axialabscheiderotoren 8 drehantreibbar gelagert ist. Durch die gegenläufige Drehung der Axialabscheiderotoren 8 wird das Erntegut auf einer schraubenlinienförmigen Bahn durch die Axialabscheidevorrichtung 6 gefördert. Von einer Oberseite des Gehäuses 7 in dessen Inneres vorstehende Rippen 9 fördern das Durchkneten des Erntegutes, wenn der äußere Rand der Wendel 18 des Axialabscheiderotors 8 an ihnen vorbeigeführt wird. Der untere Bereich des Gehäuses 7 ist durch Abscheidekörbe 10 gebildet. Das vordere Ende des Axialabscheiderotors 8 erstreckt sich in ein Einlaufkopfgehäuse 17, welches in Fig. 2 näher dargestellt ist.

Die Bestandteile des von der Axialabscheidevorrichtung 6 abgegebenen Teilstromes, Körner, Spreu und Feinstroh, die durch Öffnungen der Abscheidekörbe 10 aus der Axialabscheidevorrichtung 6 ausgeschieden werden, fallen auf den darunter befindlichen Förderboden 11 beziehungsweise einen Rücklaufboden 12.

Das während des Durchgangs durch die Axialabscheidevorrichtung 6 weitestgehend vom Korn befreite Grobstroh wird am rückseitigen Ende der Axialabscheidevorrichtung 6 ausgeworfen und fällt über eine Rutsche 13 auf den Boden. Die Drescheinrichtung 2 und die Axialabscheidevorrichtung 6 bilden so eine erste Trennstufe oder Abscheidestufe.

Eine zweite Trennstufe oder Reinigungsstufe ist im Wesentlichen aufgebaut aus einem Gebläse 14 und einer im Windstrom des Gebläses 14 liegenden Gruppe von Siebböden 15, die in einem nicht dargestellten Rahmengestell oszillierend angetrieben sind, und mit dem vorgereinigten Teilstrom beschickt werden. Das im vorgereinigten Teilstrom enthaltene Korn rieselt durch die schwingenden Siebböden 15 hindurch auf einen abschüssigen ersten Leitboden 16. Am unteren Ende des Leitbodens 16 ist eine Förderschnecke 19 angeordnet, die das Korn zu einem Elevator und durch diesen in einen Korntank fördert.

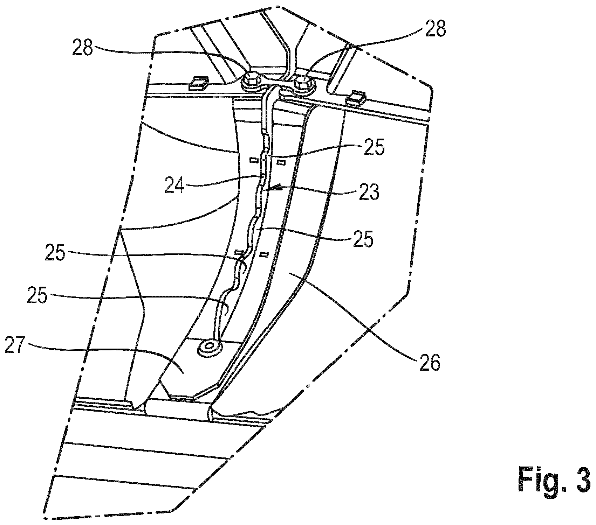

Die Fig. 2a und 2b zeigen eine Ansicht von schräg vorne beziehungsweise eine Seitenansicht des Einlaufkopfgehäuses 17 des Mähdreschers 20. Das Einlaufkopfgehäuse 17 weist jeweils einen sich über die Breite des entsprechenden Axialabscheiderotors 8 erstreckenden flächigen Einlaufabschnitt 21, welcher sich abschnittsweise unterhalb der Zuführtrommel 5 erstreckt. Zwischen den beiden Einlaufabschnitten 21 befindet sich ein rampenförmiger Gehäuseabschnitt 22. Der rampenförmige Gehäuseabschnitt 22 weist ein im Wesentlichen konkaves Profil auf, wie der Seitenansicht in Fig. 2b zu entnehmen ist. Auf dem Gehäuseabschnitt 22 ist ein im Wesentlichen klingenförmiges Trennelement 23 angeordnet. Das Trennelement 23 erstreckt sich im Wesentlichen achsparallel zu dem Gehäuseabschnitt 22, wobei dessen Profil im Wesentlichen dem des Gehäuseabschnittes 22 entspricht. Das Trennelement 23 ist vorzugsweise lösbar an dem Gehäuseabschnitt 22 angeordnet, so dass eine einfache Auswechselbarkeit beispielsweise in Folge von Verschleiß möglich ist. Hierzu kann das Trennelement 23 an dem Einlaufkopfgehäuse 17 anschraubbar sein, wie in Fig. 3 angedeutet.

Das Trennelement 23 ist, wie insbesondere aus den Fig. 2b und Fig. 3 ersichtlich ist, klingenförmig ausgeführt. Das Trennelement 23 erstreckt sich senkrecht zur Oberfläche des Gehäuseabschnittes 22. Weiterhin weist das Trennelement 23 eine profilierte Trennkante 24 auf. Die Trennkante 24 weist ein aus einer Vielzahl von zumindest teilweise bogenförmig ausgeführten Abschnitten 25 gebildetes Profil auf. Alternativ sind auch Ausführungsformen denkbar, gemäß denen die Trennkante 24 ein sägezahnförmiges Profil oder ein aus einer Vielzahl von Polygonen gebildetes Profil aufweist. Die Höhe der Profilierung nimmt in Längsrichtung des Trennelementes 23, das heißt in Umfangsrichtung der Zuführtrommel 5, ab. Die Zuführtrommel 5 weist in ihrem Mittenbereich V-förmige Leitbleche 29 auf. Die Leitbleche 29 sind in Umfangsrichtung der Zuführtrommel 5 hintereinander angeordnet und erstrecken sich von der Mantelfläche der Zuführwalze 5 ausgehend in radialer Richtung nach außen. An ihren Außenkanten weisen die Leitbleche 29 eine Profilierung 30 auf. Die Form dieser Profilierung ist vorzugsweise auf die Form der Profilierung des Trennelementes 23 abgestimmt. Das Trennelement 23 wirkt mit der rotierenden Zuführtrommel 5 zusammen. Dabei stellt das feststehende Trennelement 23 eine Art Gegenmesser für die profilierten Leitbleche 29 der Zuführtrommel dar. Die Profilierung 30 kann unmittelbar an der Außenkante der Leitbleche 29 vorgesehen sein. Alternativ kann ein Profilblech, welches an seiner Außenkante eine entsprechende Profilierung 30 aufweist, an den Leitblechen 29 lösbar befestigbar sein.

Zur Lösbaren Befestigung an dem rampenförmigen Gehäuseabschnitt 22 ist ein Sockelblech 26 vorgesehen, auf welchem das Trennelement 23 angeordnet ist. Das Sockelelement 26 ist mittels Schrauben 27 mit dem Gehäuseabschnitt 22 beziehungsweise dem Einlaufkopfgehäuse 17 lösbar verbunden. In dem in den Figuren dargestellten Ausführungsbeispiel ist das Trennelement 23 mittelbar an dem Gehäuseabschnitt 22 angeordnet. Hierzu ist auf dem Gehäuseabschnitt 22 ein keilförmiger Vorsprung 26 befestigt. Die unmittelbare Anordnung des Trennelementes 23 auf dem Gehäuseabschnitt 22 ist ebenfalls denkbar.

**Bezugszeichenliste**

| | | | |
|---|---|---|---|
| **1** | Fördereinrichtung | **30** | Profilierung |
| **2** | Drescheinrichtung | | |
| **3** | Dreschtrommel | | |
| **4** | Dreschkorb | | |
| **5** | Zuführtrommel | | |
| **6** | Axialabscheidevorrichtung | | |
| **7** | Gehäuse | | |
| **8** | Axialabscheiderotor | | |
| **9** | Rippen | | |
| **10** | Abscheidekorb | | |
| **11** | Förderboden | | |
| **12** | Rücklaufboden | | |
| **13** | Rutsche | | |
| **14** | Gebläse | | |
| **15** | Siebboden | | |
| **16** | Leitboden | | |
| **17** | Einlaufkopfgehäuse | | |
| **18** | Wendel | | |
| **19** | Förderschnecke | | |
| **20** | Mähdrescher | | |
| **21** | Einlaufabschnitt | | |
| **22** | Rampenförmiger Gehäuseabschnitt | | |
| **23** | Trennelement | | |
| **24** | Trennkante | | |
| **25** | Bogenförmige Abschnitte | | |
| **26** | Keilförmiger Vorsprung | | |
| **27** | Sockelblech | | |
| **28** | Schraube | | |
| **29** | Leitblech | | |

## Patentansprüche

1. Axialabscheidevorrichtung (6), zumindest ein Einlaufkopfgehäuse (17) und ein Paar parallel nebeneinander angeordnete mit einem ersten Ende abschnittsweise in das Einlaufkopfgehäuse (17) hineinragende Abscheiderotoren (8) aufweisend , wobei das Einlaufkopfgehäuse (17) einen sich über die Breite des jeweiligen Abscheiderotors (8) erstreckenden flächigen Einlaufabschnitt (21) aufweist, zwischen denen ein rampenförmiger, im Wesentlichen konkaves Profil aufweisender Gehäuseabschnitt (22) angeordnet ist, welcher die Auftrennung eines Erntegutstromes in zwei den Abscheiderotoren (8) zuzuführende Teilströme zumindest unterstützt,
**dadurch gekennzeichnet, dass**
auf dem rampenförmigen Gehäuseabschnitt (22) ein sich im Wesentlichen achsparallel zu diesem erstreckendes, im Wesentlichen klingenförmiges Trennelement (23) angeordnet ist.

2. Axialabscheidevorrichtung (6) nach Anspruch 1, **dadurch gekennzeichnet, dass** auf dem rampenförmigen Gehäuseabschnitt (22) ein keilförmiger Vorsprung (26) angeordnet ist, der der Aufnahme des Trennelementes (23) dient.

3. Axialabscheidevorrichtung (6) nach Anspruch 2, **dadurch gekennzeichnet, dass** sich das Trennelement (23) abschnittsweise über die Breite des Vorsprunges (26) erstreckt.

4. Axialabscheidevorrichtung (6) nach einem der Ansprüche 1 bis 3, **dadurch gekennzeichnet, dass** sich das Trennelement (23) zumindest abschnittsweise in Längsrichtung des Gehäuseabschnittes (22) erstreckt.

5. Axialabscheidevorrichtung (6) nach einem der Ansprüche 1 bis 4, **dadurch gekennzeichnet, dass** das Trennelement (23) eine profilierte Trennkante (24) aufweist.

6. Axialabscheidevorrichtung (6) nach Anspruch 5, **dadurch gekennzeichnet, dass** die Trennkante (24) ein aus einer Vielzahl von zumindest teilweise bogenförmig ausgeführten Abschnitten (25) gebildetes Profil aufweist.

7. Axialabscheidevorrichtung (6) nach Anspruch 5, **dadurch gekennzeichnet, dass** die Trennkante (24) ein sägezahnförmiges Profil aufweist.

8. Axialabscheidevorrichtung (6)nach Anspruch 5, **dadurch gekennzeichnet, dass** die Trennkante (24) ein aus einer Vielzahl von Polygonen gebildetes Profil aufweist.

9. Axialabscheidevorrichtung (6) nach einem der Ansprüche 5 bis 8, **dadurch gekennzeichnet, dass** die Höhe der Profilierung in Längsrichtung des Trennelementes (23) abnimmt.

10. Selbstfahrender Mähdrescher (20), **gekennzeichnet durch** eine Axialabscheidevorrichtung (17) nach einem der Ansprüche 1 bis 9.

11. Selbstfahrender Mähdrescher (20) nach Anspruch 10, **dadurch gekennzeichnet, dass** dem Einlaufkopfgehäuse eine tangential angeordnete Zuführtrommel (5) zugeordnet ist, die in ihrem Mittenbereich in Umfangsrichtung angeordnete V-förmige Leitbleche (29) aufweist, die sich radial nach außen erstrecken.

12. Selbstfahrender Mähdrescher (20) nach Anspruch 11, **dadurch gekennzeichnet, dass** das jeweilige Leitblech (30) an seiner Außenkante eine Profilierung (30) aufweist.

13. Selbstfahrender Mähdrescher (20) nach Anspruch 12, **dadurch gekennzeichnet, dass** die Profilierung (30) in die Außenkante des Leitbleches (29) eingearbeitet ist.

14. Selbstfahrender Mähdrescher (20) nach Anspruch 12, **dadurch gekennzeichnet, dass** die Profilierung (30) an einer Außenkante eines Profilbleches vorgesehen ist, welches an dem Leitblech (29) lösbar befestigt ist.

## Claims

1. An axial separating apparatus (6) having at least one intake head housing (17) and a pair of separating rotors (8) which are arranged in mutually parallel juxtaposed relationship and which project with a first end portion-wise into the intake head housing (17), wherein the intake head housing (17) has a flat intake portion (21) extending over the width of the respective separating rotor, between which is arranged a ramp-shaped housing portion (22) having a substantially concave profile and which at least promotes division of a crop material flow into two partial flows to be fed to the separating rotors (8),
**characterised in that**
arranged on the ramp-shaped housing portion (22) is a substantially blade-shaped separating element (23) extending in substantially axis-parallel relationship with the ramp-shaped housing portion.

2. An axial separating apparatus (6) according to claim 1 **characterised in that** a wedge-shaped projection (26) which serves to accommodate the separating element is arranged on the ramp-shaped housing portion (22).

3. An axial separating apparatus (6) according to claim 2 **characterised in that** the separating element (23) extends portion-wise over the width of the projection (26).

4. An axial separating apparatus (6) according to one of claims 1 to 3 **characterised in that** the separating element (23) extends at least portion-wise in the longitudinal direction of the housing portion (22).

5. An axial separating apparatus (6) according to one of claims 1 to 4 **characterised in that** the separating element (23) has a profiled separating edge (24).

6. An axial separating apparatus (6) according to claim 5 **characterised in that** the separating edge (24) has a profile formed from a plurality of at least partially arcuately shaped portions (25).

7. An axial separating apparatus (6) according to claim 5 **characterised in that** the separating edge (24) has a sawtooth-shaped profile.

8. An axial separating apparatus (6) according to claim 5 **characterised in that** the separating edge (24) has a profile formed from a plurality of polygons.

9. An axial separating apparatus (6) according to one of claims 5 to 8 **characterised in that** the height of the profiling decreases in the longitudinal direction of the separating element (23).

10. A self-propelled combine harvester (20) **characterised by** an axial separating apparatus (17) according to one of claims 1 to 9.

11. A self-propelled combine harvester (20) according to claim 10 **characterised in that** associated with the intake head housing is a tangentially arranged feed drum (5) which in its central region has V-shaped guide plates which are arranged in the peripheral direction and which extend radially outwardly.

12. A self-propelled combine harvester (20) according to claim 11 **characterised in that** the respective guide plate (30) has a profiling (30) at its outer edge.

13. A self-propelled combine harvester (20) according to claim 12 **characterised in that** the profiling (30) is incorporated into the outer edge of the guide plate (29).

14. A self-propelled combine harvester (20) according to claim 12 **characterised in that** the profiling (30) is provided at an outer edge of a profiled plate which is releasably fixed to the guide plate (29).

## Revendications

1. Dispositif de séparation axial (6), au moins un carter de tête d'entrée (17) et une paire de rotors séparateurs (8) disposés parallèlement l'un à l'autre avec une première extrémité pénétrant par portions dans le carter de tête d'entrée (17), le carter de tête d'entrée (17) comportant une portion d'entrée plate (21) s'étendant sur la largeur de chaque rotor séparateur (8), entre lesdites portions étant disposée une portion de carter en forme de rampe (22) qui présente un profil sensiblement concave et qui au moins favorise la division d'un flux de produit récolté en deux flux partiels à amener aux rotors séparateurs (8), **caractérisé en ce que** sur la portion de carter en forme de rampe (22) est disposé un élément diviseur formant sensiblement lame (23) s'étendant sensiblement parallèlement à l'axe de celle-ci.

2. Dispositif de séparation axial (6) selon la revendication 1, **caractérisé en ce que** sur la portion de carter en forme de rampe (22) est disposée une saillie formant coin (26) qui sert à recevoir l'élément diviseur (23).

3. Dispositif de séparation axial (6) selon la revendication 2, **caractérisé en ce que** l'élément diviseur (23) s'étend par portions sur la largeur de la saillie (26).

4. Dispositif de séparation axial (26) selon une des revendications 1 à 3, **caractérisé en ce que** l'élément diviseur (23) s'étend au moins par portions dans la direction longitudinale de la portion de carter (22).

5. Dispositif de séparation axial (6) selon une des revendications 1 à 4, **caractérisé en ce que** l'élément diviseur (23) présente un bord diviseur profilé (24).

6. Dispositif de séparation axial (6) selon la revendication 5, **caractérisé en ce que** le bord diviseur (24) présente un profil formé d'une pluralité de portions (25) conçues au moins en partie sous forme arquée.

7. Dispositif de séparation axial (6) selon la revendication 5, **caractérisé en ce que** le bord diviseur (24) présente un profil en dents de scie.

8. Dispositif de séparation axial (6) selon la revendication 5, **caractérisé en ce que** le bord diviseur (24) présente un profil formé d'une pluralité de polygones.

9. Dispositif de séparation axial (6) selon une des revendications 5 à 8, **caractérisé en ce que** la hauteur du profilage décroît dans la direction longitudinale de l'élément diviseur (23).

10. Moissonneuse-batteuse automotrice (20), **caractérisée par** un dispositif de séparation axial (17) selon une des revendications 1 à 9.

11. Moissonneuse-batteuse automotrice (20) selon la revendication 10, **caractérisée en ce qu'**au carter de tête d'entrée est associé un tambour d'amenée (5) disposé tangentiellement, lequel comporte dans sa zone centrale des tôles déflectrices en forme de V (29) qui sont disposées dans la direction circonférentielle et qui s'étendent radialement vers l'extérieur.

12. Moissonneuse-batteuse automotrice (20) selon la revendication 11, **caractérisée en ce que** chaque tôle déflectrice (30) comporte, sur son bord extérieur, un profilage (30).

13. Moissonneuse-batteuse automotrice (20) selon la revendication 12, **caractérisée en ce que** le profilage (30) est réalisé dans le bord extérieur de la tôle déflectrice (29).

14. Moissonneuse-batteuse automotrice (20) selon la revendication 12, **caractérisée en ce que** le profilage (30) est prévu sur un bord extérieur d'une tôle profilée qui est fixée de manière amovible à la tôle déflectrice (29).
